# EUROPÄISCHE PATENTANMELDUNG

(11) **EP 3 210 695 A1**
(43) Veröffentlichungstag der Anmeldung: **30.08.2017**
(21) Anmeldenummer: 17155472.8
(22) Anmeldetag: 09.02.2017
(51) Int. Cl.: B22D 31/00, B23D 31/00

(54) **SCHNEIDSYSTEM**

(30) Priorität: 24.02.2016 DE 202016100961 U
(71) Anmelder: Engelbreit & Sohn GmbH CNC-Zerspannung, 90552 Röthenbach (DE)
(72) Erfinder: ENGELBREIT, Philipp, 91207 Lauf (DE)
(74) Vertreter: FDST Patentanwälte

(57) **Zusammenfassung**

Die Erfindung betrifft ein Schneidsystem (2, 2'), insbesondere zum Abtrennen eines Angussteils (4) von einem Werkstück (6), mit einer betätigbaren Stempeleinrichtung (8) zum vertikalen Absenken eines Stempels (20) und mit einer mit dem Stempel (20) gekoppelten Abtrennvorrichtung (10, 10') mit einem feststehenden Grundkörper (30) mit einem hieran angeordneten Gegenlager (76, 76a, 76b), insbesondere einem Gegenmesser, und mit einem durch den Stempel (20) bewegbaren Schneidkörper (28), an dem ein Trennmesser (44, 44a, 44b) angeordnet ist, sowie mit einem Anpresskörper (32) mit einem Anpresselement (100, 100') zur Fixierung des Werkstücks (6) während eines Abtrennvorgangs, wobei der Anpresskörper (32) mittels einer Zwangsführung (56) an den Schneidkörper (28) gekoppelt ist, die bei einem vertikalen Absenken des Schneidkörpers (28) das Anpresselement (100, 100') des Anpresskörpers (32) horizontal gegen den Grundkörper (30), insbesondere gegen das Gegenlager (76, 76a, 76b), anpresst.

## Beschreibung

Die Erfindung betrifft ein Schneidsystem, insbesondere zum Abtrennen eines Angussteils von einem Werkstück. Unter einem Angussteil ist bei einem Gussverfahren, insbesondere bei einem Spritzgussverfahren, ein Teil des Spritzlings zu verstehen, welcher nicht zu dem Formteil des Werkstücks gehört.

Insbesondere aus dem Kraftfahrzeugbereich ist es bekannt, je nach Ausstattungsvariante eines Kraftfahrzeugmodells funktionelle und/oder aus Gründen des Designs vorgesehene Kunststoffbauteile mit einer Chrom- und/oder Lackapplikation als Zierteil zu versehen. Diese Applikationen sind in der Regel ebenfalls Kunststoffbauteile, die mit einer Chrom- und/oder Lackschicht überzogen sind, und an den üblicherweise unbehandelten, funktionellen Kunstoffbauteilen im Sichtbereich angebracht sind. Die Applikationen sind dabei geometrisch vorzugsweise derart ausgeführt, dass optisch der Eindruck entsteht, dass das funktionelle Kunststoffbauteil selbst an der dafür vorgesehenen Stelle mit eben dieser Chrom- und/oder Lackschicht überzogen ist. Diese Maßnahme hat den Vorteil, dass im Rahmen der Variantenbildung lediglich die Applikation angepasst werden muss, während das zumeist größere funktionelle Kunststoffbauteil als Basisteil unverändert verwendet werden kann.

Derartige Applikationen werden als Werkstücke üblicherweise in einem Gussverfahren, insbesondere in einem Spritzgussverfahren, hergestellt. Hierbei sind häufig Angussteile an dem jeweiligen Werkstück ausgebildet, die während des Gussverfahrens aufgrund der in den Zuführungskanälen der Gießform erstarrten Schmelze entstehen. Derartige Angussteile sind insbesondere bei Applikationen häufig optisch unansehnlich und daher unerwünscht, und werden zur Weiterverarbeitung des Werkstücks in einem gesonderten Verfahren von dem Werkstück abgetrennt. Hierbei ist es wichtig, dass das Angussteil möglichst vollständig und dennoch ohne Beschädigung der Material- und/oder Oberflächenstruktur des Werkstücks abgetrennt wird.

Zur Abtrennung des Angussteils von dem Werkstück ist es beispielsweise denkbar, das Angussteil am Werkstück abzubrechen. Ein derartiger Abbruch weist jedoch meist unsaubere und optisch unansehnliche Fehlstellen in der Oberfläche des Werkstücks auf, wodurch der Einsatz für Zierteil-Applikationen im Wesentlichen ungeeignet ist. Des Weiteren sind zerspanende Entfernungsverfahren zur Abtrennung üblich. Nachteiligerweise entstehen während des Zerspanungsvorgangs (Span-)Partikel, die aufgrund statischer Aufladung an dem Werkstück anheften können, und so die Weiterverarbeitung des Werkstücks erschweren oder unmöglich machen.

Ein spanfreies Abtrennverfahren ist beispielsweise das Laserschneiden, wobei ein hochenergetischer Laserstrahl das Angussteil von dem Werkstück abtrennt. Laserschneiden eignet sich jedoch nicht für den Einsatz bei Applikationen, da die meist metallische oder verchromte Lackschicht den Laserstrahl reflektiert, und somit das Angussteil nicht von dem Werkstück abgetrennt werden kann.

Ebenso sind sogenannte Schneidzangen beziehungsweise Schneidscheren im Einsatz, bei welchen das Angussteil entlang einer Schnittkante zwischen zwei Schneidmessern von dem Werkstück spanfrei abgetrennt wird. Hierzu wird das Werkstück, beispielsweise von einem roboterartigen Greifer, gehalten und in den Bereich der Schnittkante bewegt. Anschließend werden ein oder beide Schneidmesser aufeinander zubewegt und somit das Angussteil von dem im Wesentlichen freistehenden Werkstück mechanisch abgeschert.

Für ein präzises Schneiden ist hierbei eine möglichst verdrehfreie Fixierung des Werkstücks während des Abtrennvorgangs notwendig. In derartigen Anwendungen tritt häufig das Problem auf, dass aufgrund von Bewegungs- beziehungsweise Positionierungstoleranzen des Greifers die Werkstücke nicht exakt reproduzierbar positioniert werden. Des Weiteren tritt mitunter das Problem auf, dass das im Wesentlichen freistehende Werkstück während des Abtrennvorgangs aufgrund von auftretenden Torsionskräften während des (Ab-)Scherens verdreht oder verbogen wird. Dadurch ist es nicht möglich, die Angussteile zuverlässig sauber und gezielt vom Werkstück abzutrennen.

Der Erfindung liegt die Aufgabe zugrunde, ein besonders geeignetes Schneidsystem anzugeben, mit welchem ein gezieltes und zuverlässiges Abtrennen, insbesondere ein sauberes Abtrennen, d. h. auch ohne verbleibende Schneidkantenansätze von Angussteilen, ermöglicht ist.

Die Aufgabe wird erfindungsgemäß gelöst mit den Merkmalen des Anspruchs 1. Vorteilhafte Ausgestaltungen und Weiterbildungen sind Gegenstand der Unteransprüche.

Das erfindungsgemäße Schneidsystem ist insbesondere zum sauberen Abtrennen eines Angussteils von einem Werkstück vorgesehen und eingerichtet. Das Schneidsystem weist eine betätigbare Stempeleinrichtung zum vertikalen Absenken eines Stempels von einer Ausgangsposition in eine Endpositon entlang eines Verstellwegs auf.

Der Stempel ist mit einer Abtrennvorrichtung gekoppelt. Die Abtrennvorrichtung weist hierbei einen durch den Stempel bewegbaren Schneidkörper auf, an dem ein Trennmesser angeordnet ist. Durch den Stempel ist der Schneidkörper in Richtung eines feststehenden Grundkörpers der Abtrennvorrichtung absenkbar. Der Grundkörper weist ein Gegenlager, insbesondere ein Gegenmesser auf, welches in der Endposition des Stempels in einer Wirkverbindung mit dem Trennmesser ist.

Die Abtrennvorrichtung umfasst weiterhin einen bewegbaren Anpresskörper mit einem Anpresselement zur Fixierung des Werkstücks während eines Abtrennvorgangs, insbesondere am Ende eines Absenkvorgangs des Stempels. Der Anpresskörper ist mittels einer Zwangsführung an den Schneidkörper gekoppelt, die bei einem vertikalen Absenken des Stempels beziehungsweise des Schneidkörpers entlang des Verstellwegs das Anpresselement des Anpresskörpers horizontal gegen den Grundkörper, insbesondere gegen das Gegenlager, mit einer Anpresskraft anpresst.

Mit anderen Worten erfolgt während eines Abtrennvorgangs ein automatisches oder selbsttätiges Fixieren des Werkstücks durch das Anpresselement. Dadurch wird das Werkstück während des Abtrennens verbiegesicher und verdrehfrei gesichert, sodass ein sauberes und bündiges Abtrennen des Angussteils ermöglicht ist. Mit anderen Worten wird das Werkstück durch das Anpresselement in einer definierten Lage zwischen den Gegenlager und dem Trennmesser fixiert, sodass das Angussteil in der Wirkverbindung exakt an der zwischen dem Gegenlager und dem Trennmesser gebildeten Schnittkante abgeschert wird.

Das Trennmesser und das Gegenlager sind vorzugsweise lotrecht, das bedeutet koaxial fluchtend, entlang der vertikalen Richtung zueinander ausgerichtet. Dies bedeutet, dass in der Wirkverbindung die Schneidklingen des Trennmessers und des Gegenlagers zumindest teilweise aneinander anliegen. In einer möglichen Ausführungsform überragt das Trennmesser zumindest teilweise den Schneidkörper in Richtung des Grundkörpers, und das Gegenlager überragt zumindest teilweise den Grundkörper in Richtung des Trennmessers oder ist mit diesem fluchtend ausgeführt. Das Angussteil wird bei einem Absenken des Schneidkörpers somit mechanisch vom Werkstück abgeschert.

Der Schneidkörper, der Grundkörper und der Anpresskörper sind vorzugsweise im Wesentlichen rechteckig ausgestaltet. Das Trennmesser ist vorzugsweise an einer Vorderseite des Schneidkörpers angeordnet, das bedeutet an einer im Bedienzustand einem Benutzer zugewandten Fläche des Schneidkörpers. Der Schneidkörper ist an einer der Grundplatte abgewandten Oberseite mechanisch fest mit dem Stempel gekoppelt, das bedeutet, dass das Trennmesser der hierzu gegenüberliegenden Unterseite des Schneidkörpers zumindest teilweise übersteht. Das Gegenlager ist entsprechend an einer Vorderseite des Grundkörpers angeordnet und fluchtet beispielsweise mit dessen Schneidklinge mit der Oberseite des Grundkörpers. Das Anpresselement ist zweckmäßigerweise an der dem Grundkörper zugewandten Seitenfläche des Anpresskörpers positioniert, wobei im Bereich der hierzu senkrecht orientierten Stirnseiten die Zwangsführung zwischen Schneidkörper und Anpresskörper vorgesehen ist.

Zum Abtrennen des Angussteils wird das Werkstück im Bereich der gewünschten Abtrennkante auf das Gegenlager aufgesetzt. Unter einer Abtrennkante ist in diesem Zusammenhang insbesondere derjenige Übergangbereich zwischen dem Werkstück und dem Angussteil zu verstehen, an welchem das Angussteil von dem Werkstück abgetrennt wird. Anschließend wird der Stempel abgesenkt und somit das Anpresselement senkrecht, das bedeutet horizontal, gegen den Grundkörper beziehungsweise gegen das Gegenlager gepresst. Dadurch wird das Werkstück kraftschlüssig zwischen dem Anpresskörper und dem Grundkörper fixiert. Hernach wird die Wirkverbindung zwischen dem Trennmesser und dem Gegenlager hergestellt, sodass das Angussteil entlang der Abtrennkante abgetrennt wird. Abschließend wird der Stempel zurück in die Ausgangsposition verstellt, sodass der Anpresskörper das Werkstück freigibt, und ein neues Werkstück mit Angussteil in das Schneidsystem einlegbar ist.

Wesentlicher Vorteil der Erfindung ist, dass das Angussteil nicht aufwendig - beispielsweise mittels eines roboterartigen Greifers - positioniert werden muss, sondern lediglich auf das feststehende Gegenlager aufgesetzt wird. Mit anderen Worten ist das Werkstück auf einer Seite und das Angussteil im Wesentlichen auf der hierzu gegenüberliegenden Seite des Gegenlagers positioniert. Die für die Abtrennung korrekte und fixierte Positionierung wird in einem folgenden Schritt mittels des Anpresselements vorgenommen, wobei das Angussteil aufgrund des Aufsetzens über dem Gegenlager im Bereich der Abtrennkante stets in einem Kontakt mit der Schneidklinge des Gegenlagers ist.

Folglich wirkt beim Abtrennen oder Abscheren des Angussteils das Gegenlager stets als Gegenkontakt zu dem Trennmesser. Die durch die Absenkung wirkende Schneidkraft wird über die Schneidklingen des Gegenlagers und des Trennmessers im Bereich der Abtrennkante ausgeübt. In Kombination mit der Werkstückfixierung mittels des Anpresselements ist somit ein Verbiegen oder Verkippen des Werkstücks während des Abtrennvorgangs ausgeschlossen.

Vorzugsweise ist die Stempeleinheit des Schneidsystems rein mechanisch betätigbar, sodass keine zusätzlichen pneumatischen oder hydraulischen Leitungen zur Betätigung notwendig sind. Dadurch ist das Schneidsystem besonders kostengünstig herstellbar. Der zur Ausübung der Anpresskraft verwendete Anpresskörper wird mittels der Zwangsführung gegen den Grundkörper, das bedeutet senkrecht beziehungsweise quer zur Schneid- oder Abtrennrichtung, gepresst.

Die Zwangsführung ist zwischen dem Anpresskörper und dem Schneidkörper ausgebildet, wobei die Zwangsführung vorzugsweise derart ausgestaltet ist, dass nach der Stabilisierung und der Fixierung des Werkstücks an dem Gegenlager mittels des Anpresselements der das Trennmesser tragende Schneidkörper weiter absenkbar ist, ohne dass der Anpresskörper weiter bewegt wird. Dies bedeutet, dass der Verstellweg des Stempels im Wesentlichen zweigeteilt ist.

In einem ersten Abschnitt des Verstellwegs werden vorzugsweise sowohl der Schneidkörper als auch der hiermit mittels der Zwangsführung gekoppelte Anpresskörper bewegt, und somit das Werkstück zwischen dem Anpresselement und dem Gegenlager fixiert. In einem zweiten Abschnitt des Verstellwegs wird vorzugsweise lediglich der Schneidkörper bewegt, sodass das fixierte Werkstück mittels des Trennmessers und des Gegenlagers vom Angussteil abgetrennt wird. Dadurch ist es möglich, den Abtrennvorgang nach einem Verfahren oder einem Verstellen entlang des ersten Abschnitts abzubrechen, wenn von einem Benutzer festgestellt wird, dass das Werkstück nicht korrekt positioniert ist.

Unter der Vertikalrichtung ist hierbei insbesondere die Schneid- oder Abtrennrichtung des Schneidkörpers, und unter der Horizontalrichtung die hierzu quer orientierte Anpressrichtung des Anpresskörpers zu verstehen. Der Begriff Absenken ist insbesondere in Bezug zur Vertikalrichtung zu verstehen, unabhängig von der tatsächlichen Orientierung des Schneidsystems im Raum.

In einer bevorzugten Anwendungsform handelt es sich bei dem Werkstück beispielsweise um eine Chrom- und/oder Lackapplikation als Zierteil für ein Kraftfahrzeug. Durch den Einsatz eines erfindungsgemäßen Schneidsystems ist hierbei eine besonders saubere und optisch unauffällige Abtrennkante ermöglicht, sodass das Angussteil spanfrei und ohne eine Beschädigung der Material- oder Oberflächenstruktur des Werkstücks abgetrennt wird.

In einer geeigneten Weiterbildung erfolgt die Zwangsführung entlang einer Kulisse des Anpresskörpers. Mit anderen Worten ist die Zwangsführung vorzugsweise als eine Kulissenführung ausgeführt. Dadurch ist eine konstruktiv einfache Umsetzung der Absenkbewegung in eine Anpressbewegung realisiert.

Gemäß einer vorteilhaften Ausgestaltung weist der Schneidkörper an den seitlichen Stirnseiten, das bedeutet insbesondere an den senkrecht zur Vorderseite und senkrecht zur Oberseite orientierten Stirnflächen des Schneidkörpers, jeweils ein Führungselement auf, das entlang einer jeweiligen Führungs- oder Kulissenbahn eines Bügelhalters des Anpresskörpers zwangsgeführt ist. Das Führungselement ist beispielsweise als ein Drehrad oder als ein Gleitstein ausgeführt. Die Führungs- oder Kulissenbahn ist vorzugsweise als eine Konturmimik an einem schneidkörperseitigen Außenumfang des Bügelhalters ausgestaltet. Vorzugsweise liegt das kulissensteinartige Führungselement in der Ausgangsposition des Stempels beziehungsweise des Schneidkörpers an der Führungs- oder Kulissenbahn zumindest teilweise an oder auf. Ebenso denkbar ist es aber beispielsweise auch, dass das Führungselement erst im Zuge des Absenkens vertikal von oben auf die Führungs- oder Kulissenbahn aufgesetzt wird.

Bei einem Absenken des Schneidkörpers wird das Führungselement vertikal entlang der Absenk- oder Abtrennrichtung auf die Führungs- oder Kulissenbahn gedrückt, sodass das Führungselement und die Führungs- oder Kulissenbahn als Zwangsführung in Wirkverbindung stehen.

Bei einem weiteren Absenken des Schneidkörpers rollen oder gleiten die Führungselemente derart an den Führungs- oder Kulissenbahnen der Bügelhalter entlang, dass zumindest teilweise eine Umsetzung der Absenkbewegung des Schneidkörpers in eine hierzu quer gerichtete Linearbewegung des Anpresskörpers, insbesondere entlang der Horizontalrichtung, erfolgt. Zweckmäßigerweise sind die Bügelhalter hierzu linearbeweglich entlang der Horizontalrichtung gelagert. Zur Stabilisierung der Zwangsführung ist es beispielsweise denkbar, dass die Bügelhalter zumindest teilweise an der Grundplatte abgestützt sind.

In einer geeigneten Ausbildung weist die Führungs- oder Kulissenbahn jedes Bügelhalters einen schräg verlaufenden Bahnabschnitt für das jeweilige Führungselement auf. Vorzugsweise sind die Führungselemente bei einem Absenken des Schneidkörpers auf den schräg verlaufenden Bahnabschnitt aufgesetzt.

Der schräge Bahnabschnitt des Bügelhalters weist funktionsgetreu eine ebene Steigung mit einem Neigungswinkel auf. Unter schräg ist hierbei insbesondere eine bezüglich der Absenkrichtung und Anpressrichtung schiefe Orientierung der Führungs- oder Kulissenbahn zu verstehen, die insbesondere gegenüber der Anpress- oder Horizontalrichtung geneigt ausgerichtet ist.

Die Steigung ist vorzugsweise derart orientiert, dass sie anpresskörperseitig abfällt. Mit anderen Worten weist der somit rampenartige Bahnabschnitt des Bügelhalters in Bezug auf eine grundplattenseitige Kante anpresskörperseitig eine niedrigere Höhe auf. Das Führungselement wird bei dem Absenken vorzugsweise auf einen dem anpresskörperseitigen Ende emporstehenden Abschnitt des schrägen Bahnabschnitts aufgesetzt.

Bei einem weiteren Absenken drückt das Führungselement entlang Vertikalrichtung auf den schrägen Bahnabschnitt. Durch die in Bezug auf die rampenartige Steigung senkrecht wirkende Kraftkomponente erfolgt eine resultierende Kraft entlang der Anpressrichtung. Dies bedeutet, dass der schräge Bahnabschnitt durch das Führungselement in Horizontalrichtung weggedrückt oder weggeschoben wird. Folglich weicht der Bügelhalter, und somit der Anpresskörper, der Beaufschlagung des Führungselements in Horizontalrichtung aus. Dadurch bewegen sich die Bügelhalter sowie der daran befestigte Anpresskörper in Anpressrichtung, wodurch die Anpresskraft vom Anpresselement auf das Werkstück ausgeübt wird.

Folglich wird die Anpresskraft beim Absenken der Führungselemente durch die Bahnschräge sukzessive erhöht, bis die Führungselemente an den schrägen Bahnabschnitten vollständig abgerollt oder abgeglitten sind. Mit anderen Worten ist die Anpresskraft durch eine geeignete Dimensionierung der Länge der Steigung und des Neigungswinkels des schrägen Bahnabschnitts vorgebbar.

In einer vorteilhaften Ausführung weist die Führungs- oder Kulissenbahn der Bügelhalter einen stufenartigen beziehungsweise vertikal verlaufenden Bahnabschnitt auf. Der stufenartige Bahnabschnitt mündet hierbei vorzugsweise an dem anpresskörperseitigen Ende des schrägen Bahnabschnitts. Bei einem Gleiten oder Abrollen der Führungselemente an dem dadurch gebildeten Absatz oder Knick des jeweiligen stufenartigen Bahnabschnitts wirkt in Anpressrichtung keine resultierende Kraftkomponente, sodass lediglich die Absenkbewegung des Schneidkörpers erfolgt und der Anpresskörper nicht bewegt wird.

Mit anderen Worten ist der erste Abschnitt des Verstellwegs, bei welchem sowohl der Schneidkörper als auch der Anpresskörper bewegt werden, durch die Mimik des schrägen Bahnabschnitts der Führungs- oder Kulissenbahn dargestellt. Der zweite Abschnitt des Verstellweges, bei welchem das Werkstück durch den Anpresskörper fixiert ist und lediglich der Schneidkörper bewegt wird, ist entsprechend durch die Mimik des stufenartigen Bahnabschnitts ausgebildet.

Ein anderer oder weiterer Aspekt der Erfindung sieht vor, dass das Anpresselement federbelastet ist. Dies bedeutet, dass mindestens ein Federelement zwischen dem Anpresskörper und dem Anpresselement angeordnet ist. Dadurch erfolgt das Anpressen des Anpresselements gegen das Werkstück beziehungsweise gegen den Grundkörper zunächst entgegen einer Federkraft. Insbesondere in einer Ausführung der Erfindung bei welcher die Führungs- oder Kulissenbahn der Bügelhalter keinen stufenartigen Bahnabschnitt aufweisen wird durch die Federbelastung effektiv ein zweiter Abschnitt des Verstellwegs definiert.

In einer besonders stabilen Ausgestaltung weist der Grundkörper erste Führungsstangen zur linearen Führung des Schneidkörpers entlang der vertikalen Richtung auf. Der Grundkörper weist weiterhin zweite Führungsstangen zur linearen Führung des Anpresskörpers entlang der horizontalen Richtung auf, wobei die zweiten Führungsstangen in einer vorteilhaften Weiterbildung insbesondere federbelastet sind. Unter Federbelastung ist hierbei insbesondere eine Federbelastung zwischen dem Grundkörper und dem Anpresskörper entlang der zweiten Führungsstangen zu verstehen. Vorzugsweise sind zu diesem Zwecke Schraubenfederelemente vorgesehen, welche jeweils auf eine zweite Führungsstange aufgesetzt sind. Ebenso denkbar ist aber auch, dass die zweiten Führungsstangen beispielsweise mittels grundkörperseitigen Federelementen zur Federbelastung versehen sind.

Die ersten und zweiten Führungsstangen sind im Wesentlichen zylinderförmig und beispielsweise auch als (Führungs-)Bolzen oder (Führungs-)Stifte ausführbar. Die ersten Führungsstangen stellen sicher, dass sich die Schneidklingen des Trennmessers und des Gegenmessers in der Wirkverbindung stets präzise und punktgenau treffen. Dadurch sind besonders exakte und optisch unauffällige Abtrennkanten zwischen Angussteil und Werkstück sichergestellt. Somit wird das Angussteil im Wesentlichen ohne eine Beschädigung der Material- oder Oberflächenstruktur von dem Werkstück abgetrennt.

Die zweiten Führungsstangen sind Teil der Zwangsführung und stabilisieren und lagern den Anpresskörper. Durch die Federbelastung der zweiten Führungsstangen wird beim Abtrennvorgang eine Rückstellkraft in eine öffnende Richtung erzeugt, wodurch der Anpresskörper nach dem Abtrennvorgang besonders einfach zurück in seine Ausgangsstellung verstellbar ist.

Zum Zwecke eines möglichst bündigen Abtrennens weist der Grundkörper in einer geeigneten Ausführung auf der gegenlagerseitigen Stirnseite, das bedeutet insbesondere auf der dem Benutzer zugewandten Vorderseite, eine Aufnahme für das Angussteil auf. Dadurch ist das Werkstück leichter auf dem Gegenlager aufsetzbar und positionierbar, wodurch besonders reproduzierbare Abtrennkanten ermöglicht sind.

In einer bevorzugten Ausgestaltung weisen das Gegenlager und/oder das Trennmesser eine Aussparung für das Angussteil auf. Dadurch ist ein verbesserter Eingriff der Schneidwerkzeuge in das Werkstück realisiert, wodurch ein besonders bündiges Abtrennen, auch bei schwer zugänglichen Angussteilen, ermöglicht ist. In einer möglichen alternativen Ausgestaltungsform sind an dem Grundkörper mehrere Gegenlager und/oder an dem Schneidkörper mehrere Trennmesser angebracht, wobei die entsprechende Aussparung insbesondere als lichte Weite zwischen je zwei Gegenlagern und/oder zwischen je zwei Trennmessern ausgeführt ist.

Je nach Werkstück und/oder Angussteil sind verschiedene Ausbildungen des Anpresselements denkbar, um eine möglichst sichere Fixierung während des Abtrennvorgangs sicherzustellen. Vorzugsweise sind die Anpresselemente und/oder der gesamte Anpresskörper austauschbar, sodass bedarfsweise ein Wechsel auf ein anderes Anpresselement erfolgen kann.

In einer ersten denkbaren Ausbildung ist das Anpresselement als mindestens eine, vorzugsweise elastische, Klemmbacke ausgeführt. Die beispielsweise aus einem elastischen Gummimaterial hergestellte Klemmbacke ermöglicht hierbei eine flächige Anpressung an das Werkstück, wobei die Elastizität des Klemmbackenmaterials sicherstellt, dass die Material- oder Oberflächenstruktur des Werkstücks nicht beschädigt wird. In einer möglichen Ausbildungsform weist die Klemmbacke eine Oberflächenstrukturierung auf, mittels der ein besonders sicherer und rutschfester Halt des Werkstücks während des Anpressens sichergestellt ist.

In einer alternativen zweiten Ausbildung ist das Anpresselement als eine Anzahl von stiftartigen oder fingerartigen Fortsätzen ausgeführt, wobei jeder Fortsatz werkstückseitig einen elastischen Anpresskopf aufweist. Durch die Fortsätze wird das Werkstück beim Anpressen punktuell an mehreren Stellen fixiert, wobei die elastischen Anpressköpfe wiederum eine Beschädigung der Material- oder Oberflächenstruktur des Werkstücks vermeiden.

Gemäß einer vorteilhaften Ausführung der Erfindung weist die Stempeleinrichtung einen Hebel auf, mittels dem der Stempel manuell betätigbar und absenkbar ist. Dies bedeutet, dass die Betätigung und die Absenkung des Stempels vorzugsweise händisch durch einen Benutzer erfolgt. Insbesondere hinsichtlich des abschnittsweisen Verstellwegs erweist sich die manuelle Betätigung als besonders vorteilhaft. Nach einem Verfahren entlang des ersten Abschnitts, ist es dem Benutzer direkt möglich korrigierend in den Abtrennvorgang einzugreifen und/oder zu beurteilen, ob das Werkstück richtig positioniert und fixiert ist. Durch den Hebel ist weiterhin ein vergleichsweise langer Kraftarm realisiert, sodass die Stempeleinrichtung besonders einfach mit einem geringen Kraftaufwand betätigbar ist.

In einer vorteilhaften Weiterbildung weist die Stempeleinrichtung eine Stempelführung auf, entlang welcher der Stempel höhenverstellbar angeordnet ist. Dies bedeutet, dass die Ausgangsposition des Stempels durch die Stempelführung einstellbar ist. Dadurch ist es beispielsweise ermöglicht unterschiedliche Anpresskörper mit unterschiedlichen Bügelhaltern einzusetzen, die sich beispielsweise hinsichtlich der Höhe und Länge des schrägen Bahnabschnitts der Führungs- oder Kulissenbahn unterscheiden. Dies überträgt sich vorteilhaft auf die Flexibilität des Schneidsystems, da das Schneidsystem somit besonders einfach an unterschiedliche Werkstücke und Angussteile anpassbar ist.

Nachfolgend sind Ausführungsbeispiele der Erfindung anhand einer Zeichnung näher erläutert. Darin zeigen:
- Fig. 1: in einer perspektivischen Darstellung ein Schneidsystem mit einer Stempeleinrichtung und einer hiermit gekoppelten Abtrennvorrichtung,
- Fig. 2: in einer perspektivischen Darstellung die Stempeleinrichtung,
- Fig. 3: in einer perspektivischen Darstellung die Abtrennvorrichtung,
- Fig. 4: in einer Explosionsdarstellung die Abtrennvorrichtung,
- Fig. 5: in einer perspektivischen Darstellung eine alternative Ausgestaltung des Schneidsystems,
- Fig. 6: in einer perspektivischen Darstellung die Abtrennvorrichtung des alternativen Schneidsystems,
- Fig. 7: in einer Explosionsdarstellung die Abtrennvorrichtung des alternativen Schneidsystems, und
- Fig. 8: in einer perspektivischen Darstellung ausschnittsweise die Abtrennvorrichtung des alternativen Schneidsystems mit einem Werkstück und einem Angussteil während eines Abtrennvorgangs.

Einander entsprechende Teile und Größen sind in den Figuren stets mit den gleichen Bezugszeichen versehen.

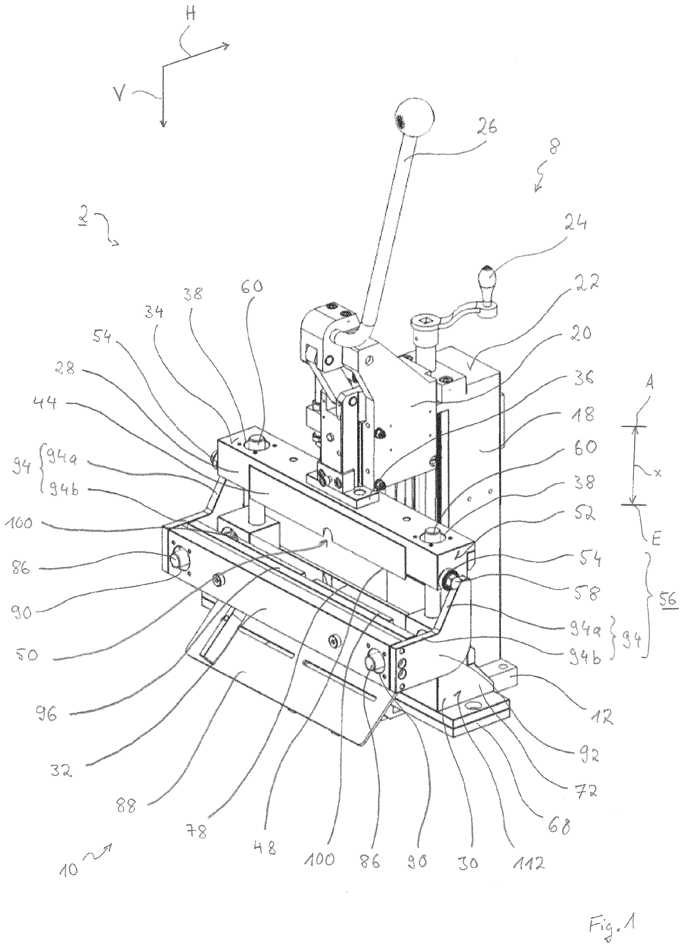

Das in der Fig. 1 dargestellte mechanische Schneidsystem 2 ist insbesondere für das gezielte Abtrennen von Angussteilen 4 an einem Werkstück 6 geeignet und eingerichtet. Mit anderen Worten ist das Schneidsystem 2 für einen Abtrennvorgang eingerichtet, bei welchem das Angussteil 4 an einer definierten Stelle (Abtrennkante) von dem Werkstück 6 abgeschert wird. Bei dem Werkstück 6 handelt es sich insbesondere um ein Galvanikteil als verchromtes Zierteil für ein Kraftfahrzeug.

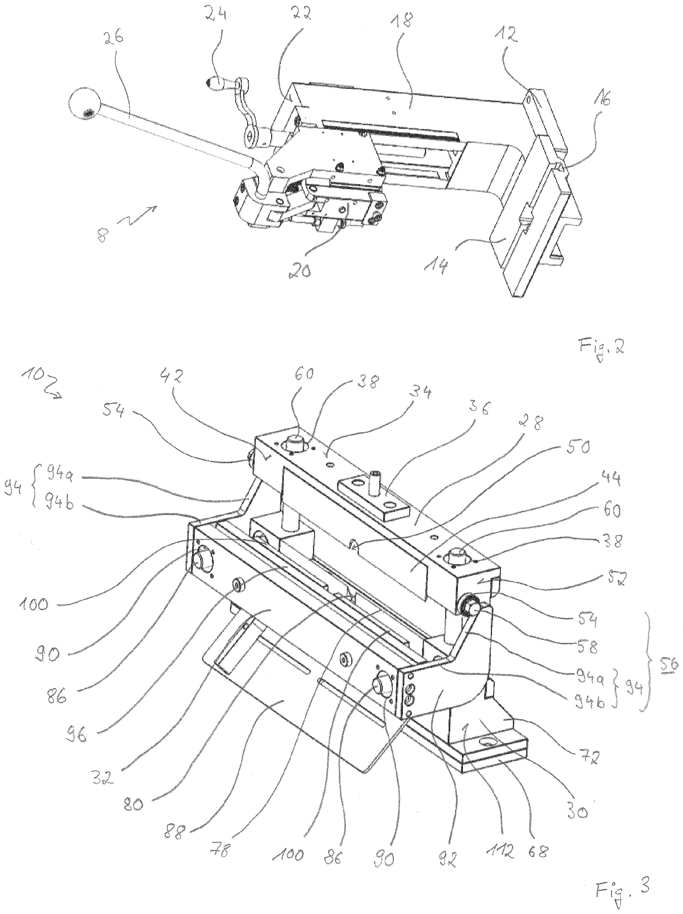

Das Schneidsystem 2 umfasst im Wesentlichen eine manuell betätigbare Stempeleinrichtung 8 sowie eine hiermit gekoppelte Abtrennvorrichtung 10. Die in Fig. 2 einzeln dargestellte Stempeleinrichtung 8 weist einen untergrundseitigen Standfuß 12 mit einer Befestigungsplatte 14 zur Halterung der Abtrennvorrichtung 10 auf. Die Befestigungsplatte 14 weist eine Langnut 16 auf, in welche ein nicht näher dargestelltes nutensteinartiges Befestigungselement der Abtrennvorrichtung 10, zum Zwecke der Befestigung der Abtrennvorrichtung 10 an der Stempeleinrichtung 8, einsetzbar ist.

Senkrecht zur Befestigungsplatte 14 ist eine Stempelführung 18 angeordnet, an der ein Stempel 20 beweglich gelagert ist. Die Stempelführung 18 ist entlang einer Vertikalrichtung V orientiert und weist an der Oberseite 22 eine Kurbel 24 auf, mit welcher der Stempel 20 entlang eines Verstellweges x koaxial zur Vertikalrichtung V verstellbar ist. Insbesondere wird hierdurch die Ausgangsposition A des Stempels 20 festgelegt. Die Ausgangsposition A bezieht sich hierbei auf eine obere Grundstellung des Stempels 20 in einem unausgelösten beziehungsweise unbetätigten Zustand. Der Stempel 20 weist einen verschwenkbaren Hebel 26 auf, wobei bei einem Verschwenken des Hebels 26 der Stempel 20 entlang des Verstellweges x aus der Ausgangsposition A in eine Endposition E vertikal abgesenkt wird. Die Endposition E bezieht sich hierbei auf eine untere Stellposition des Stempels 20, bei welchem die Abtrennvorrichtung 10 betätigt ist, und das Angussteil 4 vom Werkstück 6 abgeschert wird.

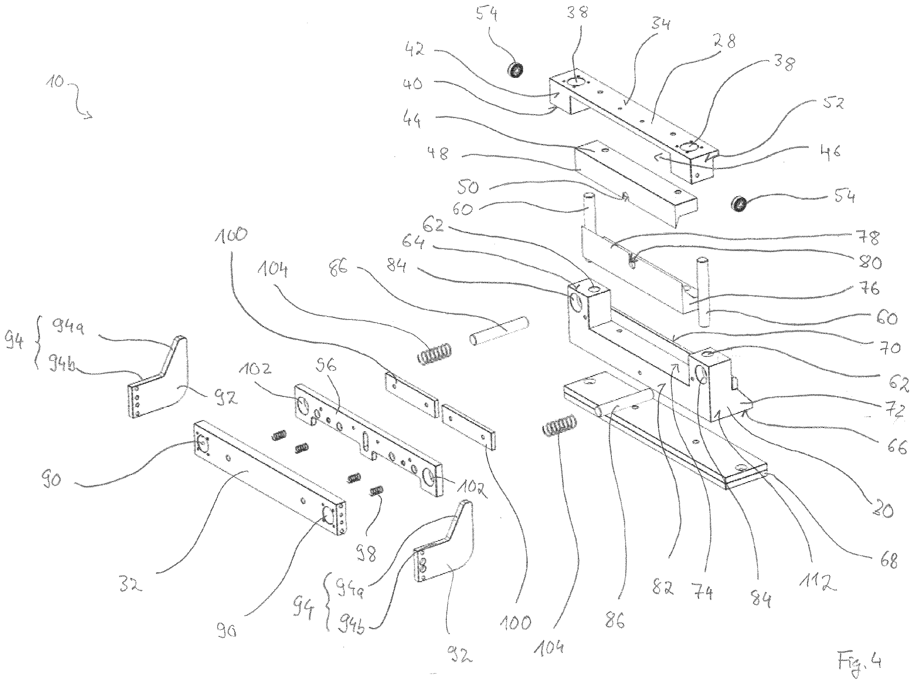

Der Stempel 20 ist untergrundseitig mit einem Schneidkörper 28 der Abtrennvorrichtung 10 gekoppelt. Die in Fig. 3 perspektivisch und in Fig. 4 in einem auseinandergenommenen Zustand dargestellte Abtrennvorrichtung 10 umfasst im Wesentlichen den Schneidkörper 28, einen Grundkörper 30 sowie einen Anpresskörper 32.

Der bewegliche Schneidkörper 28 ist im Wesentlichen rechteckig und weist an seiner Oberseite 34 eine mittige Halterung 36 zur Befestigung an dem Stempel 20 auf. Die Oberseite 34 weist weiterhin zwei zylindrische Aussparungen 38 auf, die den Schneidkörper 28 zur Unterseite 40 hin durchsetzen. Die Aussparungen 38 sind zu den schmalseitigen Enden hin angeordnet. An der Vorderseite 42, das bedeutet an der im Montagezustand einem Benutzer zugewandten Seite, weist der Schneidkörper 28 ein Trennmesser 44 auf.

Das Trennmesser 44 ist im Montagezustand in einer etwa rechteckigen Aufnahme 46 an der Unterseite 40 des Schneidkörpers 28 befestigt. Das Trennmesser 44 weist eine längliche Schneidklinge 48 auf, die sich im Wesentlichen über die gesamte Länge des Schneidkörpers 28 zwischen den Aussparungen 38 erstreckt. Die Schneidklinge 48 weist mittig eine etwa U-förmige Aussparung 50 auf. Im Montagezustand überragt die Schneidklinge 48 des Trennmessers 44 die Unterseite 40 des Schneidkörpers 28 entlang der Vertikalrichtung V.

An den seitlichen Stirnseiten 52 des Schneidkörpers 28 ist jeweils ein Führungselement 54 einer Zwangsführung 56 angeordnet. Die Führungselemente 54 sind in diesem Ausführungsbeispiel als drehbar gelagerte Drehräder ausgestaltet. Die Führungselemente 54 sind in dem untergrundseitigen, vorderen Eckbereich der Stirnseiten 52 mittels jeweils einem Schraubbolzen 58 befestigt.

Im Montagezustand liegen in den Aussparungen 38 des Schneidkörpers 28 jeweils eine Führungsstange 60 des Grundkörpers 30 ein. Durch die Führungsstangen 60 wird der Schneidkörper 28 bei einem Absenken des Stempels 20 linear und lotrecht entlang der Vertikalrichtung V geführt. Die Führungsstangen 60 sind in zylindrischen Aufnahmen 62 an der Oberseite 64 des Grundkörpers 30 angeordnet, die koaxial fluchtend zu den Aussparungen 50 ausgerichtet sind.

Der im Wesentlichen rechteckige Grundkörper 30 weist an seiner Unterseite 66 eine befestigbare Halteplatte 68 auf. Die Halteplatte 68 weist untergrundseitig die Befestigungsmittel zur Befestigung in der Langnut 16 der Befestigungsplatte 14 auf. Der Grundkörper 30 weist zur Rückseite 70 hin untergrundseitig eine rampenartige Verbreiterung 72 zur verbesserten Stabilität mit der Halteplatte 68 auf.

Zwischen den Aufnahmen 62 für die Führungsstangen 60 ist eine etwa rechteckige Aussparung 74 in den Grundkörper 30 eingelassen. Die Aussparung 74 ist nach vorne und oben hin geöffnet und dient der Aufnahme eines als Gegenmesser ausgeführten Gegenlagers 76.

Ähnlich zum Trennmesser 44 weist das Gegenlager 76 eine Schneidklinge 78 mit einer etwa U-förmigen, mittigen Aussparung 80 auf. Die Oberseite der Schneidklinge 78 fluchtet im Montagezustand mit der Oberseite 64 des Grundkörpers 30. Durch die Führungsstangen 60 ist hierbei eine lotrechte Ausrichtung der Schneidklingen 48 und 78 des Trennmessers 44 und des Gegenlagers 76 zueinander sichergestellt.

An der Vorderseite 82 des Grundkörpers 30 sind in den oberen Eckbereichen jeweils eine zylindrische Aufnahme 84 für zwei weitere Führungsstangen 86 vorgesehen, die entlang der Horizontalrichtung H orientiert angeordnet sind. Der Grundkörper 30 weist in dieser Ausführung weiterhin eine vorderseitige Rampe 88 auf, an der das Werkstück 6 und/oder das Angussteil 4 nach einem Abtrennvorgang zur erleichterten Entnahme aus dem Schneidsystem 2 abgleiten.

Die Führungsstangen 86 dienen der linearen Führung des Anpresskörpers 32 entlang einer Horizontal- oder Anpressrichtung H. Das bedeutet der Anpresskörper 32 ist im Wesentlichen senkrecht zu der Vertikal- oder Absenkrichtung V des Stempels 20 beziehungsweise des Schneidkörpers 28 beweglich angeordnet. Der etwa plattenartige Anpresskörper 32 weist zu diesem Zwecke an den schmalseitigen Enden jeweils eine zylindrische Aussparung 90 zur Aufnahme und Führung der Führungsstangen 86 auf.

Im Montagezustand ist der Anpresskörper 32 vorderseitig zum Grundkörper 30 als ein senkrecht zur Vertikalrichtung V und Horizontalrichtung H gerichteter Bügel der Abtrennvorrichtung 10 angeordnet. Hierzu weist der Anpresskörper 32 seitlich jeweils einen etwa L-förmigen Bügelhalter 92 auf, wobei der Anpresskörper 32 an dem vertikalen Ende des horizontalen L-Schenkels angebracht ist.

Die Oberseite der Bügelhalter 92 ist hierbei als eine Führungs- oder Kulissenbahn 94 für die Führungselemente 54 des Schneidkörpers 28 ausgestaltet. Mit anderen Worten ist die Führungs- oder Kulissenbahn 94 ein Teil der insbesondere als Kulissenführung ausgestalteten Zwangsführung 56, wobei die Führungs- oder Kulissenbahn 94 durch unterschiedliche Bahnabschnitte eine Konturmimik zur Übersetzung der Bewegung der kulissensteinartigen Führungselemente 54 in eine Bewegung des Anpresskörpers 32 ausbildet.

In dem in den Figuren 1 bis 4 dargestellten Ausführungsbeispiel weist die Führungs- oder Kulissenbahn 94 einen rampenartigen schrägen Bahnabschnitt 94a, sowie einen horizontalen Bahnabschnitt 94b auf. Wie beispielsweise in der Fig. 1 ersichtlich ist, liegen die Führungselemente 54 - im unausgelösten Zustand der Abtrennvorrichtung 10 - an einem oberen Ende des Bahnabschnitts 94a an. Der schräge Bahnabschnitt 94a weist hierbei eine Steigung gegenüber der Horizontal-richtung H auf, und steigt von dem vorderseitigen Bahnabschnitt 94b zur Rückseite des Bügelhalters 90 hin an.

Bei einer Betätigung des Hebels 26 wird der Stempel 20 und somit der Schneidkörper 28 entlang der Absenkrichtung V abgesenkt. Dadurch drücken die Führungselemente 54 entlang der Vertikalrichtung V von oben auf den schrägen Bahnabschnitt 94a. Durch die linearbewegliche Lagerung aufgrund der Führungsstangen 86 weichen die Bügelhalter 90 der vertikalen Beaufschlagung durch eine Bewegung entlang der Horizontalrichtung H aus. Dadurch rollen die Führungselemente 54 an dem schrägen Bahnabschnitt 94a ab, bis der horizontale Bahnabschnitt 94b erreicht ist. Mit anderen Worten wird der Anpresskörper 32 durch das Abgleiten oder Abrollen der Führungselemente 54 an dem schrägen Bahnabschnitt 94a in Anpressrichtung H auf den Grundkörper 30 hinzubewegt.

Der Anpresskörper 32 weist in dieser Ausgestaltung eine dem Grundkörper 30 zugewandte Anpressplatte 96 auf, die mittels vier Federelementen 98 gegenüber dem Anpresskörper 32 federbeaufschlagt ist. In den Figuren ist lediglich ein Federelement 98 beispielhaft mit einem Bezugszeichen versehen. An der Rückseite der Anpressplatte 96, das bedeutet zum Grundkörper 30 hin, sind zwei Klemmbacken als Anpresselemente 100 vorgesehen. Die Anpresselemente 100 sind aus einem elastischen Gummimaterial hergestellt.

Die Anpressplatte 96 weist schmalendseitig zwei zylindrische Aussparungen 102 zur Hindurchführung der Führungsstangen 86 auf. Auf den Führungsstangen 86 ist im Montagezustand jeweils eine Schraubenfeder als Federelement 104 aufgesetzt. Die Federelemente 104 weisen hierbei einen größeren Durchmesser als die Aussparungen 102 auf. Dadurch sind die Federelemente 104 im Montagezustand schlüssig zwischen dem Grundkörper 30 und der Anpressplatte 96 gehalten. Eine Bewegung des Anpresskörpers 32 in Anpressrichtung H erfolgt somit entgegen der Rückstellkräfte der Federelemente 98 und 104.

Zur Abtrennung des Angussteils 4 wird das Werkstück 6 im Bereich der gewünschten Abtrennkante auf das Gegenlager 76 aufgesetzt. Hierzu wird das Werkstück 6 insbesondere im Bereich der Aussparung 80 über die Schneidklinge 48 des Gegenlagers 76 gehängt. Mit anderen Worten ist das Werkstück 6 somit vorzugsweise auf der Vorderseite des Gegenlagers 76 und das Angussteil 4 im Wesentlichen auf der hierzu gegenüberliegenden Rückseite des Gegenlagers 76 positioniert. Dadurch wird das Werkstück 6 durch die Schwerkraft an der gewünschten Abtrennkante gehalten.

Anschließend wird der Stempel 20 mit dem Hebel 26 abgesenkt. Durch die Zwangsführung 56 wird der Anpresskörper 32 senkrecht, das bedeutet horizontal, gegen den Grundkörper 30 bewegt. Die Zwangsführung 56 ist hierbei im Wesentlichen zwischen der Führungs- oder Kulissenbahn 94 des Anpresskörpers 32 und den Führungselementen 54 des Schneidkörpers ausgebildet.

Während dem Abgleiten oder Abrollen der Führungselemente 54 an den schrägen Bahnabschnitten 94a wird der Anpresskörper 32 in Anpressrichtung H bewegt. Dadurch wird das Werkstück 6 von dem Anpresselementen 100 der Anpressplatte 96 an die Vorderseite 82 des Grundkörpers 30 beziehungsweise des Gegenlagers 76 gepresst, und somit in dessen Lage fixiert. Mit anderen Worten wird das Werkstück 6 kraftschlüssig zwischen dem Anpresskörper 32 und dem Grundkörper 30 geklemmt. Das Stauchen der Federelemente 98 und 104 erfolgt hierbei beispielsweise zeitgleich mit dem Abgleiten oder Abrollen der Führungselemente 54.

Nach dem Anpressen des Werkstücks 6 wird der Schneidkörper 28 und das Trennmesser 44 weiter abgesenkt bis die Schneidklingen 48 und 78 des Trennmessers 44 und des Gegenlagers 76 aufeinandergedrückt werden. Die durch die Absenkung wirkende Schneidkraft wird über die Schneidklingen 48 und 78 im Bereich der Abtrennkante ausgeübt, sodass das Angussteil 4 vom Werkstück abgeschert wird. Das abgescherte Werkstück 6 gleitet anschließend an der Vorderseite 82 und der Rampe 88 ab.

Mit anderen Worten erfolgt während eines Abtrennvorgangs ein automatisches oder selbsttätiges Fixieren eines Werkstücks 6 durch das Anpresselement 100 des Anpresskörpers 32. Dadurch wird das Werkstück 6 während des Abtrennens verbiegesicher und verdrehfrei gesichert, sodass ein sauberes und bündiges Abtrennen des Angussteils 4 ermöglicht ist. Dies bedeutet, dass das Werkstück 6 durch das Anpresselement 100 in einer definierten Lage zwischen den Gegenlager 76 und dem Trennmesser 44 geklemmt ist.

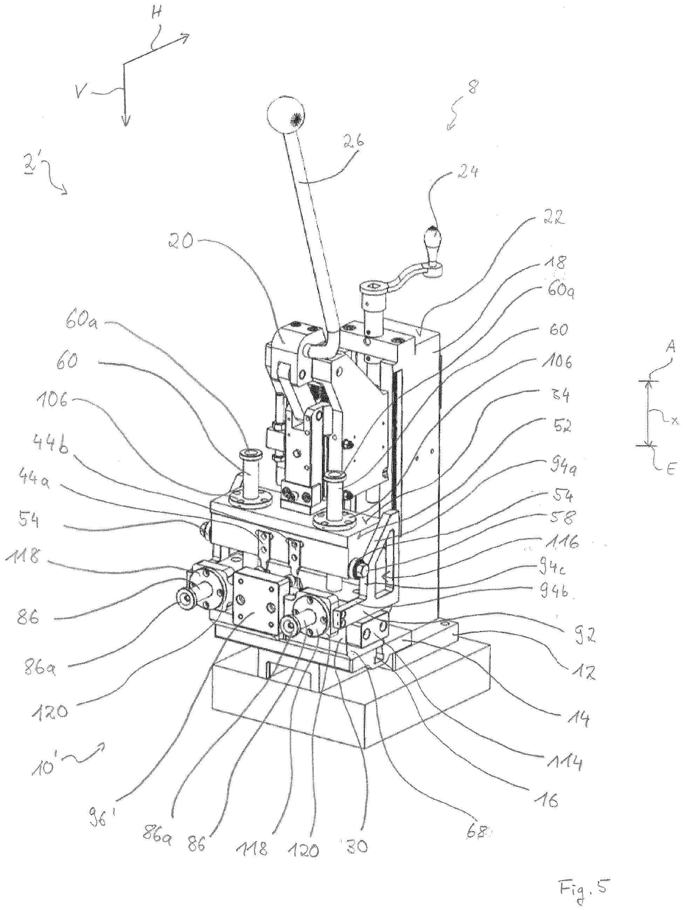

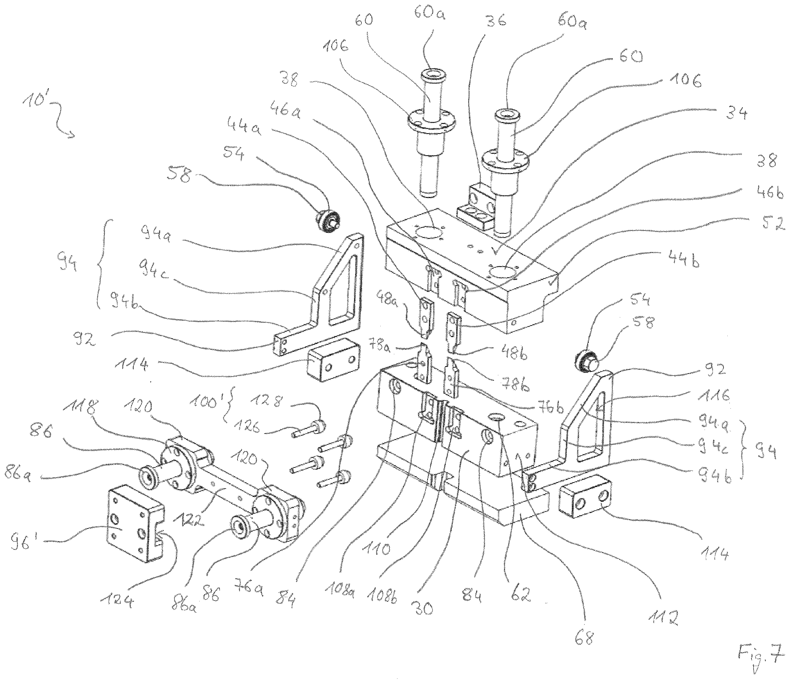

Anhand der Figuren 5 bis 8 ist nachfolgend ein alternatives Ausführungsbeispiel eines Schneidsystems 2' näher erläutert. Die Fig. 5 zeigt das Schneidsystem 2' in einem ausgelösten Zustand, bei welchem der Hebel 26 der Stempeleinrichtung 8 betätigt ist. Dadurch ist der Stempel 20 in die Endposition E verstellt, und eine Abtrennvorrichtung 10' betätigt. Das Schneidsystem 2' unterscheidet sich von dem vorstehend beschriebenen Ausführungsbeispiel im Wesentlichen durch die Ausgestaltung der Abtrennvorrichtung 10'.

Der etwa rechteckige Schneidkörper 28 der Abtrennvorrichtung 10' ist an dessen Oberseite 34 mit dem Stempel 20 der Stempeleinrichtung 8 gekoppelt. Der Schneidkörper 28 ist mittels der Führungsstangen 60 des Grundkörpers 30 linear entlang der Vertikalrichtung V geführt, wobei die Führungsstangen 60 in diesem Ausführungsbeispiel einen freiendseitigen Anschlagkragen 60a als obere Begrenzung des Bewegungswegs des Schneidkörpers 28 aufweisen. Die Führungsstangen 60 sind hierbei jeweils in einem Befestigungsflansch 106 des Schneidkörpers 28 gelagert, die im Montagezustand von der Oberseite 34 her im Bereich der Aussparungen 38 montiert sind.

Der Schneidkörper 28 weist in diesem Ausführungsbeispiel zwei vergleichsweise schmale Trennmesser 44a und 44b auf, die in korrespondierenden Aufnahmen 46a und 46b an der Vorderseite 42 angebracht sind. Die Schneidklingen 48a und 48b der Trennmesser 44a und 44b überragen hierbei die Unterseite 40 des Schneidkörpers 28 in Richtung des Grundkörpers 30.

Der rechteckige Grundkörper 30 weist in dieser Ausgestaltung zwei Gegenmesser als Gegenlager 76a und 76b auf, die im Montagezustand lotrecht zu den Trennmessern 44a und 44b des Schneidkörpers 28 angeordnet sind. Die Gegenlager 76a und 76b sind ähnlich zu den Trennmessern 44a und 44b an der Vorderseite 82 des Grundkörpers 30 in Aufnahmen 108a und 108b montiert. In diesem Ausführungsbeispiel überragen die Schneidklingen 78a und 78b der Gegenlager 76a und 76b die Oberseite 64 des Grundkörpers 30 in Richtung des Schneidkörpers 28.

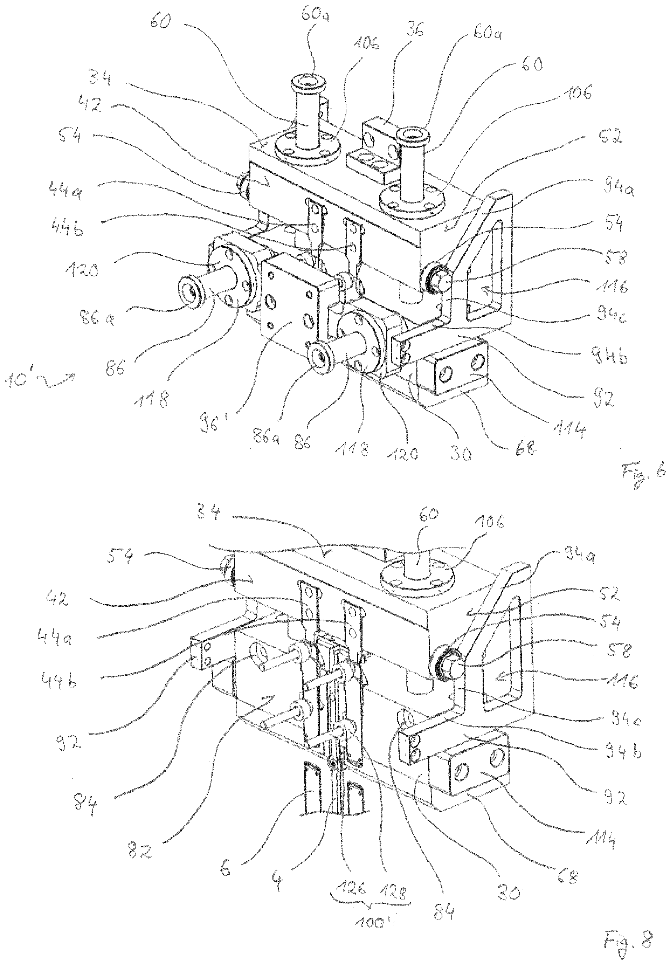

Der Grundkörper 30 weist zwischen den Gegenlagern 76a und 76b eine nutenartige Aufnahme 110 auf. Die Aufnahme 110 verläuft in Vertikalrichtung V entlang der Vorderseite 82 und erstreckt sich bis in die Halteplatte 68. Wie insbesondere in der Fig. 8 erkennbar, dient die Aufnahme 110 der Aufnahme des Angussteils 4 während eines Abtrennvorgangs. An den seitlichen Stirnseiten 112 des Grundkörpers 30 ist jeweils ein im Wesentlichen rechteckiger Lagerblock 114 zur Auflage und Führung der Bügelhalter 92 angebracht.

Die Bügelhalter 92 sind in diesem Ausführungsbeispiel material- und gewichtssparend mit einer zentralen Aussparung 116 im Bereich des vertikalen L-Schenkels versehen. Die Führungs- oder Kulissenbahn 94 weist hierbei zwischen dem schrägen Bahnabschnitt 94a und dem horizontalen Bahnabschnitt 94b einen vertikalen oder stufenartigen Bahnabschnitt 94c auf. Dadurch ist ein stufen- oder knickförmiger Absatz der Führungs- oder Kulissenbahn 94 zwischen dem schrägen Bahnabschnitt 94a und dem horizontalen Bahnabschnitt 94b gebildet.

Die Führungsstangen 86 zur Führung des Anpresskörpers 32 weisen freiendseitig Anschlagkragen 86a auf und sind mittels Befestigungsflanschen 118 am Anpresskörper 32 linearbeweglich gelagert. In diesem Ausführungsbeispiel ist weist der Anpresskörper 32 eine etwa hantelförmige Querschnittsform mit zwei seitlichen Befestigungsplatten 120 und einem dazwischen einstückig angeformten Querbalken 122 auf. Die Aussparungen 90 sind zentral in die Befestigungsplatten 120 eingebracht und nehmen die Befestigungsflansche 118 im Montagezustand auf.

Der Querbalken 122 weist mittig eine schraubbefestigte, rechteckige, Anpressplatte 96' auf, an der in den vier Eckbereichen jeweils ein Anpresselement 100' befestigt ist. Die Anpressplatte 96' weist eine rückseitige Befestigungsnut 124 zur Montage an dem Querbalken 122 auf. Mit anderen Worten überragen die Anpresselemente 100' im Montagezustand den Querbalken 122 in Richtung des Grundkörpers 30. Die Anpresselemente 100' sind in diesem Ausführungsbeispiel jeweils mit einem stiftartigen Fortsatz 126 und einem hieran angebundenen gummielastischen, etwa noppenartigen Anpresskopf 128 ausgeführt. In den Figuren ist beispielhaft lediglich ein Anpresselement 100' mit Bezugszeichen versehen.

In Fig. 8 ist ein Abtrennvorgang mittels des Schneidsystems 2' schematisch dargestellt. In diesem Ausführungsbeispiel sind vier laschenartige Werkstücke 6 an ein gemeinsames, etwa gitterartiges, Angussteil 4 angeformt. In diesem Ausführungsbeispiel werden jeweils zwei Werkstücke 6 von dem Angussteil 4 während eines Abtrennvorgangs abgeschert. Hierzu wird das Angussteil 4 in die Aufnahme 110 des Grundkörpers 30 eingesetzt, sodass das Angussteil 4 im Wesentlichen auf der Rückseite der Gegenlager 76a und 76b positioniert ist. Die oberen zwei Werkstücke 6 sind somit an der Vorderseite des Gegenlagers 76a einerseits und der Vorderseite des Gegenlagers 76b andererseits positioniert. Die Abtrennkanten liegen hierbei auf den Schneidklingen 78a beziehungsweise 78b auf. In der Fig. 8 ist beispielhaft lediglich ein Werkstück 6 mit einem Bezugszeichen versehen.

Bei einem Absenken des Stempels 20 mittels des Hebels 26 werden die beiden Werkstücke 6 durch jeweils zwei Anpresselemente 100' des Anpresskörpers 32 fixiert. Die Zwangsführung 56 ist in dieser Ausführung durch das Zusammenspiel der Führungselemente 54 und der Konturmimik der Führungs- oder Kulissenbahn 94 der Bügelhalter 92 des Anpresskörpers 32 realisiert.

Während des Absenkens rollen die drehbar gelagerten Führungselemente 54 des Schneidkörpers 28 zunächst an dem schrägen Bahnabschnitt 94a der Führungs- oder Kulissenbahn 94 ab. Dadurch wird der Anpresskörper 32 in Anpressrichtung H bewegt und die Werkstücke 6 von den Anpresselementen 100' der Anpressplatte 96' an die Vorderseite 82 des Grundkörpers 30 beziehungsweise der Gegenlagers 76a und 76b gepresst. Die Anpresselemente 100' fixieren somit paarweise das jeweilige Werkstück 6 punktweise sowohl an einem oberen Anpresspunkt als auch an einem unteren Anpresspunkt.

Nach dem Anpressen der Werkstücke 6 wird der Schneidkörper 28 und somit die Trennmesser 44a und 44b über den vertikalen Bahnabschnitt 94c der Führungs- oder Kulissenbahn 94 weiter abgesenkt, ohne dass dabei der Anpresskörper 32 weiter in Horizontalrichtung H gedrückt wird. Vorzugsweise ist die Länge und/oder Steigung des schrägen Bahnabschnitts 94a derart dimensioniert, dass nach dem Abrollen die Werkstücke 6 verdreh- und verbiegesicher fixiert sind. Die durch die Absenkung wirkende Schneidkraft wird über die Schneidklingen 48a und 48b sowie 78a und 78b im Bereich der Abtrennkanten ausgeübt, sodass das Angussteil 4 von den Werkstücken 6 abgeschert wird.

Mit anderen Worten erfolgt während eines Abtrennvorgangs ein automatisches oder selbsttätiges Fixieren der Werkstücke 6 durch die Anpresselemente 100' des Anpresskörpers 32. Dadurch werden die Werkstücke 6 während des Abtrennens verbiegesicher und verdrehfrei an jeweils zwei Anlagepunkten gesichert, sodass ein sauberes und bündiges Abtrennen des Angussteils 4 sichergestellt ist.

Die Erfindung ist nicht auf die vorstehend beschriebenen Ausführungsbeispiele beschränkt. Vielmehr sind auch andere Varianten der Erfindung von dem Fachmann hieraus ableitbar, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2, 2': Schneidsystem
- 4: Angussteil
- 6: Werkstück
- 8: Stempeleinrichtung
- 10, 10': Abtrennvorrichtung
- 12: Standfuss
- 14: Befestigungsplatte
- 16: Langnut
- 18: Stempelführung
- 20: Stempel
- 22: Oberseite
- 24: Kurbel
- 26: Hebel
- 28: Schneidkörper
- 30: Grundkörper
- 32: Anpresskörper
- 34: Oberseite
- 36: Halterung
- 38: Aussparung
- 40: Unterseite
- 42: Vorderseite
- 44, 44a, 44b: Trennmesser
- 46, 46a, 46b: Aufnahme
- 48, 48a, 48b: Schneidklinge
- 50: Aussparung
- 52: Stirnseite
- 54: Führungselement
- 56: Zwangsführung
- 58: Schraubbolzen
- 60: Führungsstange
- 60a: Anschlagkragen
- 62: Aufnahme
- 64: Oberseite
- 66: Unterseite
- 68: Halteplatte
- 70: Rückseite
- 72: Verbreiterung
- 74: Aussparung
- 76, 76a, 76b: Gegenlager
- 78, 78a, 78b: Schneidklinge
- 80: Aussparung
- 82: Vorderseite
- 84: Aufnahme
- 86: Führungsstange
- 86a: Anschlagkragen
- 88: Rampe
- 90: Aussparung
- 92: Bügelhalter
- 94: Führungs- oder Kulissenbahn
- 94a, 94b, 94c: Bahnabschnitt
- 96, 96': Anpressplatte
- 98: Federelement
- 100, 100': Anpresselement
- 102: Aussparung
- 104: Federelement
- 106: Befestigungsflansch
- 108a, 108b: Aufnahme
- 110: Aufnahme
- 112: Stirnseite
- 114: Lagerblock
- 116: Aussparung
- 118: Befestigungsflansch
- 120: Befestigungsplatte
- 122: Querbalken
- 124: Befestigungsnut
- 126: Fortsatz
- 128: Anpresskopf

## Patentansprüche

1. Schneidsystem (2, 2'), insbesondere zum Abtrennen eines Angussteils (4) von einem Werkstück (6),
- mit einer betätigbaren Stempeleinrichtung (8) zum vertikalen Absenken eines Stempels (20) und
- mit einer mit dem Stempel (20) gekoppelten Abtrennvorrichtung (10, 10') mit einem feststehenden Grundkörper (30) mit einem hieran angeordneten Gegenlager (76, 76a, 76b), insbesondere einem Gegenmesser, und
- mit einem durch den Stempel (20) bewegbaren Schneidkörper (28), an dem ein Trennmesser (44, 44a, 44b) angeordnet ist, sowie
- mit einem Anpresskörper (32) mit einem Anpresselement (100, 100') zur Fixierung des Werkstücks (6) während eines Abtrennvorgangs,
- wobei der Anpresskörper (32) mittels einer Zwangsführung (56) an den Schneidkörper (28) gekoppelt ist, die bei einem vertikalen Absenken des Schneidkörpers (28) das Anpresselement (100, 100') des Anpresskörpers (32) horizontal gegen den Grundkörper (30), insbesondere gegen das Gegenlager (76, 76a, 76b), anpresst.

2. Schneidsystem (2, 2') nach Anspruch 1, wobei die Zwangsführung (56) entlang einer Kulisse des Anpresskörpers (32) erfolgt.

3. Schneidsystem (2, 2') nach Anspruch 1 oder 2,
- wobei der Schneidkörper (28) an den seitlichen Stirnseiten (52) jeweils ein Führungselement (54) aufweist, das entlang einer jeweiligen Führungs- oder Kulissenbahn (94) eines Bügelhalters (92) des Anpresskörpers (32) zwangsgeführt ist, und
- wobei die Führungselemente (54) bei einem Absenken des Schneidkörpers (28) derart an den Führungs- oder Kulissenbahnen (94) der Bügelhalter (94) gleiten oder abrollen, dass zumindest teilweise eine Umsetzung der Absenkbewegung des Schneidkörpers (28) in eine quer gerichtete Linearbewegung des Anpresskörpers (32) erfolgt.

4. Schneidsystem (2, 2') nach Anspruch 3, wobei die Führungs- oder Kulissenbahn (94) der Bügelhalter (92) einen schräg verlaufenden Bahnabschnitt (94a) für das jeweilige Führungselement (54) aufweist, die die Absenkbewegung des Schneidkörpers (28) in die quer gerichtete Linearbewegung des Anpresskörpers (32) umsetzt.

5. Schneidsystem (2') nach Anspruch 3 oder 4, wobei die Führungs- oder Kulissenbahn (94) der Bügelhalter (92) einen stufenartigen Bahnabschnitt (94c) aufweist, und wobei bei einem Gleiten oder Abrollen der Führungselemente (54) an dem jeweiligen Bahnabschnitt (94c) lediglich die Absenkbewegung des Schneidkörpers (28) erfolgt.

6. Schneidsystem (2) nach einem der Ansprüche 1 bis 5, wobei das Anpress-element (100) gegenüber dem Anpresskörper (32) federbelastet ist.

7. Schneidsystem (2, 2') nach einem der Ansprüche 1 bis 6, wobei der Grundkörper (30) einerseits erste Führungstangen (60) zur linearen Führung des Schneidkörpers (28) entlang der vertikalen Richtung (V) und andererseits zweite Führungsstangen (86) zur linearen Führung des Anpresskörpers (32) entlang der horizontalen Richtung (H) aufweist.

8. Schneidsystem (2) nach Anspruch 7, wobei die zweiten Führungsstangen (86) federbelastet sind.

9. Schneidsystem (2') nach einem der Ansprüche 1 bis 8, wobei der Grundkörper (30) auf der gegenlagerseitigen Stirnseite (82) eine Aufnahme (110) für das Angussteil (4) aufweist.

10. Schneidsystem (2) nach einem der Ansprüche 1 bis 9, wobei das Gegenlager (76) und/oder das Trennmesser (44) eine Aussparung (50, 80) für das Angussteil (4) aufweist.

11. Schneidsystem (2) nach einem der Ansprüche 1 bis 10, wobei das Anpress-element (100) als mindestens eine, vorzugsweise elastische, Klemmbacke ausgeführt ist.

12. Schneidsystem (2') nach einem der Ansprüche 1 bis 10, wobei das Anpress-element (100') als eine Anzahl von stiftartigen Fortsätzen (126) ausgeführt ist, die jeweils einen Anpresskopf (128) aufweisen.

13. Schneidsystem (2, 2') nach einem der Ansprüche 1 bis 12, wobei die Stempeleinrichtung (8) einen Hebel (26) zur manuellen Betätigung und Absenkung des Stempels (20) aufweist.

14. Schneidsystem (2, 2') nach einem der Ansprüche 1 bis 13, wobei die Stempeleinrichtung (8) eine Stempelführung (18) aufweist, entlang welcher der Stempel (20) höhenverstellbar angeordnet ist.
